Europäisches Patentamt

European Patent Office

Office européen des brevets

(11) Veröffentlichungsnummer: **0 208 904**
**A1**

## EUROPÄISCHE PATENTANMELDUNG

(21) Anmeldenummer: 86107795.6

(22) Anmeldetag: 07.06.86

(51) Int. Cl.⁴: **B 23 B 39/28**

(30) Priorität: 20.06.85 DE 3522069

(43) Veröffentlichungstag der Anmeldung: 21.01.87
Patentblatt 87/4

(84) Benannte Vertragsstaaten: **AT BE CH FR GB IT LI NL SE**

(71) Anmelder: **Schott Glaswerke, Hattenbergstrasse 10,
D-6500 Mainz (DE)**

(84) Benannte Vertragsstaaten: **BE CH FR IT LI NL SE AT**

(71) Anmelder: **Carl-Zeiss-Stiftung trading as SCHOTT
GLASWERKE, Hattenbergstrasse 10,
D-6500 Mainz 1 (DE)**

(84) Benannte Vertragsstaaten: **GB**

(72) Erfinder: **Neuhoff, Eckard, Dipl.-Ing.,
Otto-Nielk-Strasse 10, D-6204 Taunusstein 2 (DE)**
Erfinder: **Cichutek, Karl-Heinz, Am Hipperich 107,
D-6500 Mainz (DE)**

(74) Vertreter: **Rasper, Joachim, Dr., Bierstadter Höhe 22,
D-6200 Wiesbaden (DE)**

(54) **Verkettbare Bohrstation.**

(57) Bei einer Bohrstation zum Anbringen von Bohrungen
unterschiedlicher Größe in einer Platte aus beliebigem Material, die aus Bohrspindel, Bohrer und Bohrtisch besteht,
sind Transportbänder (3a, b) vorgesehen, mittels derer die zu
bearbeitende Platte (2) zu- und wegführbar ist. Der Bohrtisch besteht aus einem mehrteiligen rahmenförmigen Plattenaufnehmer, (4) der die Platte nur am Rand festhält. Bohrspindel (5a, b) und/oder Plattenaufnehmer (4) sind derart
gesteuert bewegbar, daß die Bohrung an jeder gewünschten Stelle der Platte, auch von unten, anbringbar ist. Diese
Bohrstation ist mit weiteren, identischen Bohrstationen zu
Fertigungslinien verkettbar.

## Verkettbare Bohrstation

Die Erfindung betrifft eine Bohrstation, welche mit weiteren identischen Bohrstationen verkettbar ist, zum Anbringen von Bohrungen in einer Platte aus beliebigem Material, wobei diese Bohrungen gewünschte Durchmesser aufweisen, mit Bohrspindel, Bohrer und Bohrtisch.

Beim Anbringen von Bohrungen in Platten, die aus den verschiedensten Materialien bestehen und in den unterschiedlichsten Abmessungen vorliegen können, müssen die Anordnung und die Durchmesser der Bohrungen dem jeweiligen Verwendungszweck angepaßt sein. Dies erfordert flexible Bohrstationen, mit denen jedes beliebige Bohrbild angefertigt werden kann.

Bei den bekannten Einspindelbohrmaschinen wird die zu bearbeitende Platte mittels eines fest eingestellten Anschlags positioniert und dann unter der feststehenden Bohrspindel jeweils um den vorgewählten Bohrlochabstand getaktet durchgeschoben. Diese Bohrmaschinen haben den Nachteil, daß nur Bohrungen mit einem einzigen Durchmesser eingebracht werden können, wobei alle Bohrungen auf einer Achse liegen. Für weitere Bohrungen muß dann der Anschlag, der Plattenvorschub und gegebenenfalls der Bohrer neu eingestellt bzw. ausgetauscht werden. Durch den Einsatz nur eines Bohrers ist die Durchsatzleistung gering.

Bei den bekannten Mehrspindelbohrmaschinen sind mehrere Bohrspindeln in Vorschubrichtung der Platte nebeneinander angeordnet. Entsprechend dem Bohrbild können diese Bohrspindeln beliebig senkrecht zur Vorschubrichtung und in Vorschubrichtung verschoben werden. Die Platte wird ebenfalls mittels eines Anschlags positioniert und dann getaktet

- 2 -

0208904

unter den Bohrspindeln durchgeschoben. Alle Bohrspindeln können jedoch nur dann gleichzeitig eingesetzt werden, wenn das Bohrbild dies zuläßt bzw. wenn der Abstand der Bohrungen größer ist als das durch die Baubreite der Bohrspindeln vorgegebene Grenzmaß.

Mehr Flexibilität wird mit einer anderen bekannten Mehrspindelbohrmaschine erreicht, die 4 Spindeln mit Bohrern unterschiedlichen Durchmessers aufweist. Die Platte wird mittels eines X-Y-Tisches entsprechend dem Bohrbild verschoben. Nach jeder Positionierung kann jedoch nur jeweils eine Bohrspindel eingesetzt werden, da im allgemeinen die Anordnung der festinstallisterten Spindeln nicht dem Bohrbild entspricht.

Der Nachteil aller bekannten Mehr- und Einspindelbohrmaschinen besteht darin, daß sie nicht mit anderen oder der gleichen Bohrmaschine verkettbar sind, d.h. es können nicht mehrere Bohrmaschinen in einer Fertigungslinie kombiniert werden, so daß nur eine begrenzte Anzahl von Bohrungen mit einer begrenzten Anzahl von unterschiedlichen Durchmessern eingebracht werden können.

Ziel der vorliegenden Erfindung ist daher eine Bohrstation, die mit weiteren Bohrstationen verkettbar ist, so daß jedes beliebige Bohrbild mit beliebig vielen unterschiedlichen Bohrdurchmessern herstellbar ist, wobei auch das Bohrbild von Platte zu Platte schnell und ohne mechanische Umbauten der Bohrstation geändert werden kann.

Dieses Ziel wird mit einer Bohrstation erreicht, bei der diese Platte mittels Transportbänder zu- und wegführbar ist, dieser Bohrtisch aus einem mehrteiligen rahmenförmigen Plattenaufnehmer besteht, welcher diese Platte nur am Rand festhält, und bei der diese Bohrspindel und/oder dieser Plattenaufnehmer derart gesteuert bewegbar ist/sind, daß die Bohrung an jeder gewünschten Stelle dieser Platte anbringbar ist.

0208904

Vorzugsweise ist dieser rahmenförmige Plattenaufnehmer zweiteilig ausgeführt.

Die Steuerung erfolgt über einen angeschlossenen Rechner, so daß über ein geeignetes Programm jederzeit auch kurzfristig das Bohrbild verändert werden kann.

Gemäß einer bevorzugten Ausführungsform ist dieser Plattenaufnehmer dreidimensional (in X-, Y- und Z-Richtung) bewegbar.

Gemäß einer vorteilhaften Ausführungsform ist diese Bohrstation mit einer zusätzlichen zweiten Bohrspindel ausgerüstet, die dieser ersten Bohrspindel gegenüber angeordnet ist, so daß die Bohrung von oben und von unten ausführbar ist. Beide Bohrspindeln können ebenfalls dreidimensional (in X-, Y- und Z-Richtung) bewegbar sein.

Beim Durchbohren mittels des oberen Bohrers lastet auf der Platte ein einseitiger Druck. Um hierbei ein Durchbrechen der Platte zu verhindern, ist an die Bohrstelle zur Abstützung der Platte ein Gegenhalter von unten an die Platte anlegbar.

Dadurch, daß die zu bearbeitende Platte mittels Transportbänder zu- und wegführbar ist, kann die erfindungsgemäße Bohrstation mit weiteren Bohrstationen in einer Fertigungslinie verknüpft werden, vorausgesetzt, daß diese Bohrstationen auch die beanspruchten Merkmale aufweisen.

Die erfindungsgemäße Bohrstation bietet somit die Voraussetzung für unterschiedliche Anordnungen der Bohrstationen. Eine bevorzugte Anordnung ist die Anordnung in einer Reihe. Bei der Reihenanordnung werden zweckmäßigerweise so viele Bohrstationen nebeneinander angeordnet wie Bohrungen mit unterschiedlichen Durchmessern in den zu bearbeitenden Platten einzubringen sind.

Natürlich ist auch eine Parallelanordnung sowie die Kombination von Parallel- und Reihenanordnung dieser Bohrstationen möglich. Dadurch, daß alle Bohrstationen identisch sind, ist ein leichter Austausch, eine Erweiterung oder Verkürzung der Bohrstraße möglich.

Das Einbringen der Bohrungen läuft erfindungsgemäß so ab, daß die zu bearbeitende Platte auf zwei Transportbändern horizontal aufliegend einer ersten Bohrstation zugeführt wird, wo sie mittels des Plattenaufnehmers von den Transportbändern abgehoben wird.

Danach wird/werden diese Platte und/oder die Bohrspindel dieser Bohrstation derart positioniert, daß die Bohrung an der gewünschten Stelle dieser Platte vorgenommen werden kann, und unter Absenken der Bohrspindel wird die Bohrung mit dem gewünschten Durchmesser und an der gewünschten Stelle vorgenommen. Danach wird diese Platte durch Absenken des Plattenaufnehmers wieder auf die Transportbänder gelegt und einer weiteren Bohrstation zugeführt, wo eine weitere Bohrung entsprechend dem soeben beschriebenen Verfahren angebracht wird.

Die beiden Transportbänder werden beabstandet voneinander geführt, so daß eine zusätzliche zweite Bohrspindel verwendet werden kann, die zwischen diesen Transportbändern hindurchgreifen kann. Diese zweite Bohrspindel ist dieser ersten Bohrspindel derart gegenüber angeordnet, daß die Bohrung von oben und von unten gleichzeitig ausgeführt wird. Nach Erreichen einer bestimmten Eindringtiefe wird zunächst der untere Bohrer entfernt und dann mit dem oberen Bohrer vollständig durchgebohrt. Dadurch wird erreicht, daß beim Durchbohren der untere Rand der Bohrung nicht ausbricht.

Die Positionierung kann auf zwei Arten erfolgen: Nach dem Anheben des Plattenaufnehmers wird entweder dieser Plattenaufnehmer zusammen mit der Platte zweidimensional (in X- und Y-Richtung) verschoben, wobei die Bohrspindel fest bleibt, oder die Platte bleibt nach dem Anheben des Plattenaufnehmers in ihrer mittigen Position und die Bohrspindel(n) werden entsprechend dem Bohrbild zweidimensional (in X- und Y-Richtung) verschoben.

Beispielhafte Ausführungsformen werden nachfolgend unter Hinweis auf die Zeichnungen näher erläutert.

Es zeigen

Fig. 1 eine Ansicht einer erfindungsgemäßen Bohrstation,

Fig. 2 die Verknüpfung mehrerer identischer erfindungsgemäßer Bohrstationen.

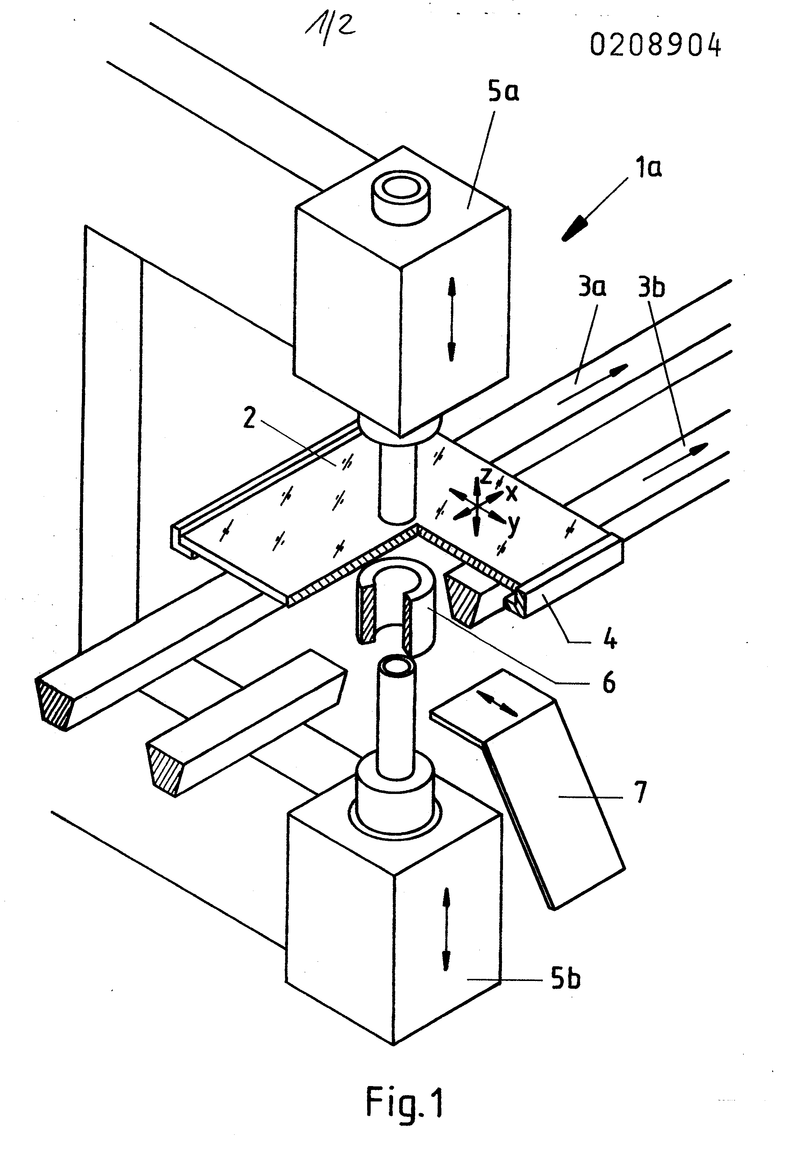

Die in Fig. 1 gezeigte Bohrstation 1a besteht aus zwei gegenüberliegenden Bohrspindeln 5a und 5b, die in dieser Ausführungsform nur in Z-Richtung bewegbar sind. Der rahmenförmige Plattenaufnehmer 4 erfaßt die Platte 2 nur am Rand und ist zur Positionierung der Platte in X-, Y- und Z-Richtung bewegbar.

Die beiden Transportbänder 3a, 3b, die die zu bearbeitende Platte zu- und wegführen, werden so beabstandet geführt, daß die untere Bohrspindel 5b zwischen den beiden Transportbändern hindurch nach oben geführt werden kann. Auf diese Weise kann die Bohrung von oben und von unten gleichzeitig durchgeführt werden. Ein Gegenhalter 6 dient dazu, die Platte an der Bohrstelle von unten abzustützen. Ein Butzenabweiser 7 wird während des Bohrvorgangs zur Bohrstelle geschwenkt.

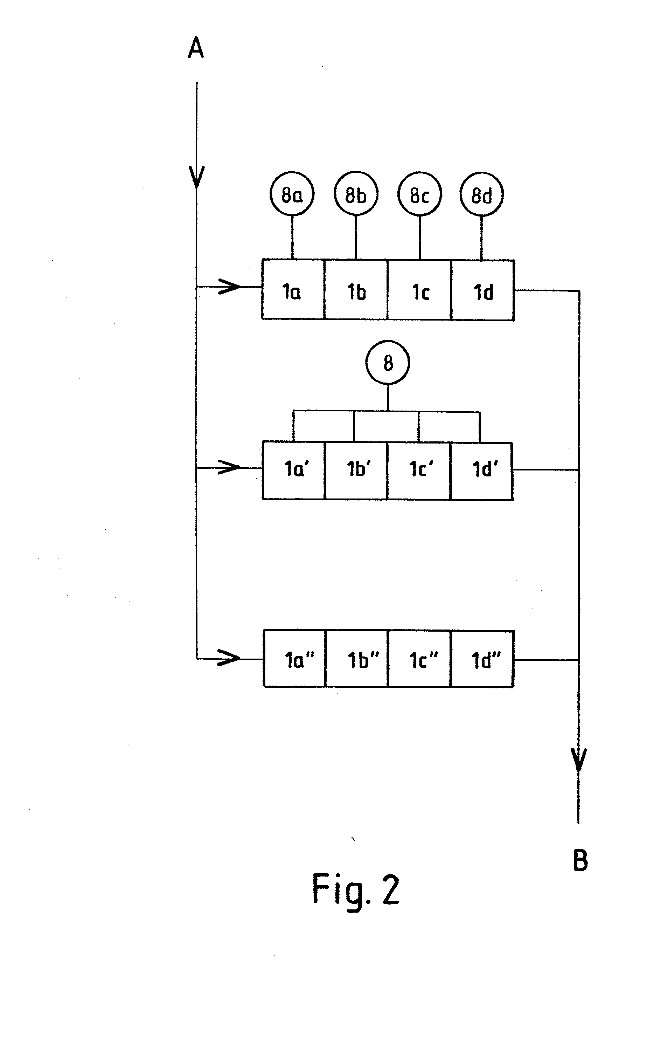

In der Fig. 2 ist schematisch dargestellt, auf welche Weise die Bohrstationen in eine Fertigungslinie zwischen den beiden Bearbeitungspositionen A und B integriert werden können. Um einen hohen Durchsatz zu erreichen, wird in dem vorliegenden Beispiel die Fertigungslinie in drei parallel angeordnete Bohrstrecken aufgeteilt. In jeder Bohrstrecke sind vier erfindungsgemäße Bohrstationen 1a, 1b, 1c, 1d bzw. 1a', 1b', 1c', 1d' und 1a", 1b", 1c", 1d" nebeneinander angeordnet. Weisen die Bohrer jeder Bohrstation jeweils einen anderen Durchmesser auf, können vier verschieden große Bohrungen in beliebiger Anzahl an den gewünschten Stellen der Platte angebracht werden. Sollen Bohrungen mit mehr als vier unterschiedlichen Durchmessern ausgeführt werden, so können in jede Bohrstrecke weitere Bohrstationen eingefügt werden. Jede Bohrstation kann an einen separaten Rechner 8a, 8b, 8c, 8d oder es können alle Bohrstationen an einen gemeinsamen Rechner 8 angeschlossen sein.

Durch dieses erfindungsgemäße Verfahren in Verbindung mit diesen Bohrstationen wird ein bisher noch nicht erreichter Grad an Flexibilität erzielt.

## Patentansprüche

1. Bohrstation, welche mit weiteren identischen Bohrstationen verkettbar ist, zum Anbringen von Bohrungen in einer Platte aus beliebigem Material, wobei diese Bohrungen gewünschte Durchmesser aufweisen, mit Bohrspindel, Bohrer und Bohrtisch,

dadurch gekennzeichnet,

daß diese Platte (2) mittels Transportbänder (3a, 3b) zu- und wegführbar ist,

daß dieser Bohrtisch aus einem mehrteiligen rahmenförmigen Plattenaufnehmer (4) besteht, der diese Platte (2) nur am Rand festhält, und
daß diese Bohrspindel (5a) und/oder dieser Plattenaufnehmer derart gesteuert bewegbar ist/sind, daß die Bohrung an jeder gewünschten Stelle dieser Platte anbringbar ist.

2. Bohrstation nach Anspruch 1, dadurch gekennzeichnet, daß dieser Plattenaufnehmer (4) dreidimensional (in X-, Y- und Z-Richtung) bewegbar ist.

3. Bohrstation nach Anspruch 1 oder 2, dadurch gekennzeichnet, daß sie eine zusätzliche zweite Bohrspindel (5b) aufweist, die dieser ersten Bohrspindel (5a) gegenüber angeordnet ist, so daß die Bohrung von oben und von unten ausführbar ist.

4. Bohrstation nach einem der Ansprüche 1 bis 3, dadurch gekennzeichnet, daß diese Bohrspindel(n) (5a/5b) dreidimensional in X-, Y- und Z-Richtung bewegbar ist/sind.

5. Bohrstation nach einem der Ansprüche 1 bis 4, dadurch gekennzeichnet, daß sie einen Gegenhalter (6) aufweist, der an der Bohrstelle von unten an diese Platte (2) anlegbar ist.

0208904

6. Bohrstation nach einem der Ansprüche 1 bis 5, dadurch gekennzeichnet, daß sie an einen Rechner (8a) angeschlossen ist und von diesem gesteuert ist.

7. Anordnung mehrerer Bohrstationen gemäß Anspruch 1, dadurch gekennzeichnet, daß diese Bohrstationen (1a, 1b usw.) in Reihe angeordnet sind.

1/2

0208904

Fig.1

Fig. 2

Europäisches Patentamt

**EUROPÄISCHER RECHERCHENBERICHT**

0208904

Nummer der Anmeldung

EP 86 10 7795

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-1 930 961 (LIBBEY-OWENS-FORD CO.) * Seite 7, Zeilen 1-11, Anspruch 4; Figuren 1-3 * | 1 | B 23 B 39/28 |
| A | | 3,7 | |
| Y | US-A-4 280 775 (WOOD) * Anspruch 1, Zusammenfassung; Figuren 1, 4, 5 * | 1 | |
| A | | 2 | |
| Y | DE-U-7 430 319 (INFRANOR S.A.) * Ansprüche 1, 5; Figur 1 * | 1 | |
| A | | 4 | |
| A | US-A-2 302 878 (MUHL et al.) * Anspruch 1; Figuren 1-3 * | 1 | |
| A | US-A-3 663 114 (WELSH et al.) * Zusammenfassung; Figuren 3, 4 * | 1,4 | |
| A | FR-A-1 084 184 (LANGEL) * Seite 1, rechte Spalte, Zeile 22 - Seite 2, linke Spalte, Zeile 3; Figur 1 * | 1 | |

--- -/-

| | RECHERCHIERTE SACHGEBIETE (Int. Cl.4) |
|---|---|
| | B 23 B 39/00 |
| | B 23 B 41/00 |
| | B 23 Q 37/00 |
| | B 23 Q 39/00 |
| | B 23 Q 41/00 |

Der vorliegende Recherchenbericht wurde für alle Patentansprüche erstellt.

| Recherchenort | Abschlußdatum der Recherche | Prüfer |
|---|---|---|
| BERLIN | 16-09-1986 | MARTIN A E W |

Europäisches
Patentamt

**EUROPÄISCHER RECHERCHENBERICHT**

0208904

Nummer der Anmeldung

EP 86 10 7795

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 400 615 (GODLOVE et al.)<br>* Anspruch 1; Figur 1 * | 2 | |
| A | DE-U-8 503 153 (BENTELER-WERKE AG)<br>* Seite 1, Zeilen 5-10; Seite 3, Zeile 13 - Seite 4, Zeile 8; Figuren 1, 2 * | 3,5 | |
| A | TECHNICA, Band 22, Nr. 18, 1973, Seiten 1615-1619, Basel, CH; H. KIRSCH "Produktionssysteme mit verschieden hoher Automatisierungsstufe"<br>* Seite 1617, Figuren 3b, c; Seite 1619 * | 6 | |

RECHERCHIERTE SACHGEBIETE (Int. Cl.4)

Der vorliegende Recherchenbericht wurde für alle Patentansprüche erstellt.

| Recherchenort<br>BERLIN | Abschlußdatum der Recherche<br>16-09-1986 | Prüfer<br>MARTIN A E W |
|---|---|---|